**Europäisches Patentamt**

**European Patent Office**

**Office européen des brevets**

(19)

(11) Veröffentlichungsnummer: **0 306 554 B1**

## (12) EUROPÄISCHE PATENTSCHRIFT

(45) Veröffentlichungstag der Patentschrift: **02.01.92**

(21) Anmeldenummer: **87114772.4**

(22) Anmeldetag: **09.10.87**

(51) Int. Cl.5: **F16L 47/02**, F16L 47/00, B29C 39/18

(54) **Verbindungssystem.**

(30) Priorität: **05.09.87 EP 87113016**

(43) Veröffentlichungstag der Anmeldung:
**15.03.89 Patentblatt 89/11**

(45) Bekanntmachung des Hinweises auf die
Patenterteilung:
**02.01.92 Patentblatt 92/01**

(84) Benannte Vertragsstaaten:
**AT BE CH DE ES FR GB GR IT LI LU NL SE**

(56) Entgegenhaltungen:
**EP-A- 0 157 640**
**CH-A- 450 236**
**FR-A- 2 113 512**
**US-A- 3 561 795**

(73) Patentinhaber: **Hewing GmbH**
**Waldstrasse 3**
**W-4434 Ochtrup(DE)**

(72) Erfinder: **Hewing, Bernd**
**Gronauer Strasse 14**
**W-4434 Ochtrup(DE)**

(74) Vertreter: **Hoffmeister, Helmut, Dr. Dipl.-Phys.**
**Patentanwalt Goldstrasse 36**
**W-4400 Münster(DE)**

# Beschreibung

Die Erfindung betrifft ein Verfahren zum Verbinden von zwei Rohrenden oder von mit Stutzen versehenen Formstücken mit einem Rohrende. Die beiden Rohrenden werden dabei auf die beiden Enden einer dicht anliegenden Innenhülse oder das mit dem Stutzen zu verbindende Rohrende auf einen Rohrsitz des Stutzen aufgeschoben und anschließend mit außen den aufgeschobenen Bereich umspannenden Mitteln festgelegt, entsprechend dem Merkmal b) des Anspruches 1.

Derartige Verbindungen können angewandt werden auf Kunststoff-, Metall- oder Keramikrohre. Unter mit Stutzen versehen Formstücken werden beispielsweise aus der Instalationstechnik bekannte T-Stücke, Übergangsstücke, Verteiler, Ventile und dergleichen verstanden. Insbesondere eignet sich das Verbindungsverfahren und die Verbindung für im Bereich der Brauchwasserinstallation zu verwendende Kunststoffrohre aus vernetztem Polyethylen (VPE). In der Installationstechnik verwendet man im allgemeinen Verbindungen, die aus einem Einsatzstück, das in das Ende eines Kunststoffrohres eingesteckt wird, aus einem im Querschnitt keilförmigen, längsgeschlitzten Klemmring, der außen auf das Rohrende aufgesetzt wird und aus einer mit dem Einsatzstück zu verschraubenden, den Klemmring überdeckenden und unter Zwischenlage des Rohrendes gegen das Einsatzstück verspannenden Überwurfmutter bestehen. Die einzelnen Teile sind aufwendig in der Herstellung und damit teuer, insbesondere bei größeren Rohrdimensionen. Ein anderer Nachteil ist, daß die Verschraubung, je nachdem, wer sie ausführt, mehr oder weniger fest angezogen wird, was zu starken Streuungen in der Qualität der Rohrverbindung führt. Als weiterer Nachteil ist noch anzuführen, daß Kunststoffrohre dazu neigen, unter Preßdruck zu fließen, so daß mit der Zeit der Verschraubungsdruck auf das Rohr nachläßt. Diese sogenannte Relaxation führt zu Undichtigkeiten der Rohrverbindung und erfordert zu deren Vermeidung eine ständige Kontrolle und ein Nachziehen der Verschraubung.

Es ist weiterhin bekannt ein Verfahren der eingangs genannten Art (vgl. FR-A-2 113 512), bei dam um die Rohrenden, die auf die Innenhülse geschoben sind, eine verflüssigbare Masse aus Kunststoff außen angebracht wird. Anschließend wird eine steife Außenhülse über die Rohrenden geschoben, wobei dann der Zwischenraum zwischen Innenmantel der Außenhülse und Außenseite der Rohrenden mit der genannten elastischen Dichtungs- oder Klebemasse gefüllt ist.

Als nachteilig wird hierbei empfungen, daß die Dichtungsmasse zu der Steifigkeit der Verbindung nicht beiträgt, sondern lediglich eine dünne Dicht- oder Klebeschicht bildet.

Es stellt sich daher die Aufgabe, eine Verbindung der eingangs genannten Art zu schaffen, bei der auch die Dichtungsschicht zwischen Außenhülse und Innenmantel zur Steifigkeit der Verbindung wesentlich beiträgt, die kostengünstig ausführbar ist, einfach und mit gleichbleibender Qualität herstellbar ist und die eine hohe Langzeitstabilität und -dichtigkeit gewährleistet.

Die Lösung dieser Aufgabe gelingt erfindungsgemäß durch ein Verfahren gemäß dem kennzeichnenden Teil des Anspruches 1.

Als Vergußmassen eignen sich alle material- und temperaturverträglichen Materialien, wie z. B. betonartige oder keramische Massen, Bitumina, metallene Vergußmassen mit niedrigen Schmelzpunkten, aushärtende Ein- bzw. Mehr-Komponenten-Harze, Elastomere, Duromere oder schmelzfähige Kunststoffe (Thermoplaste), insbesondere Polymerisate, soweit sie zunächst in einem fließenden Zustand sich befinden oder gebracht werden und anschließend in einen festen oder quasi festen Zustand übergehen.

Von besonderem Vorteil ist eine an sich aus der FR-A-2 113 512 bekannte Verfahrensvariante, bei der um die Außenhülse und der wenigstens teilweise außerhalb der Hülse befindlichen Masse, z. B. einem Thermoplasten, eine Umhüllung aus wärmeschrumpfender Folie aufgeschoben wird, anschließend der Verbindungsbereich auf eine, Temperatur erhitzt wird, bei der der gegebenenfalls verwendete Thermoplast fließfähig ist und die Folie schrumpft, wobei die Umhüllung Druck auf die fließende Masse ausübt und diese in die einzubettenden Bereiche drückt.

In Abwandlung dazu kann auch mit einer Gießform gearbeitet werden, in die die Masse eingegossen wird.

Vorzugsweise werden das Kunststoffrohr und gegebenenfalls das (Installations-)Element an seinem Verbindungsende außenseitig haftreibungserhöhend, z. B. mit im wesentlichen in Umfangsrichtung verlaufenden Rillen oder Stegen, vorstehenden Zähnen, aufgepreßten Zahnringen oder dergleichen, strukturiert und in das Rohrende eine hohlzylindrische Innenhülse dichtend eingesetzt. Anstelle einer mechanischen Strukturierung kann auch eine chemotechnische Strukturierung treten, z. B. durch angelöste Oberflächenbereiche, wobei dies auch beispielsweise durch ein der Vergußmasse beigefügtes Lösungsmittel geschehen kann.

Von Vorteil ist, daß bei der erhaltenen Rohrverbindung kein Druck auf das Kunststoffrohr ausgeübt wird, so daß es nicht zu einem Fließen des Kunststoffes kommen kann. In Längsrichtung der Verbindung wirkende Kräfte werden von der mit den strukturierten Oberflächen von Rohrende und Außenhülse verzahnten Vergußmasse aufgefangen. Die Außenhülse sorgt zudem für eine sichere Aufnahme von nach außen wirkenden Kräften. Die bei thermischen Wechselbelastungen auftretenden Dehnungen und Verkürzungen werden von der Vergußmasse elastisch aufgefangen. Damit bietet die neue Verbindung ein hohes Maß an Sicherheit hinsichtlich Dichtigkeit und Stabilität über einen langen Zeitraum auch bei hohen Druck- und Temperaturbelastungen.

Vorteilhafte Ausgestaltungen der Erfindung sind in den Unteransprüchen angegeben.

Die Erfindung wird im folgenden anhand einer Zeichnung erläutert. Die Figuren der Zeichnung zeigen:

Figur 1      eine Rohrverbindung zwischen zwei Kunststoffrohren,

Figur 2      eine Rohrverbindung zwischen einem Kunststoffrohr und einem Metall-T-Stück und

Figur 3      eine Rohrverbindung gemäß Figur 1, die mit einem Schlauch aus Schrumpffolie durchgeführt wird.

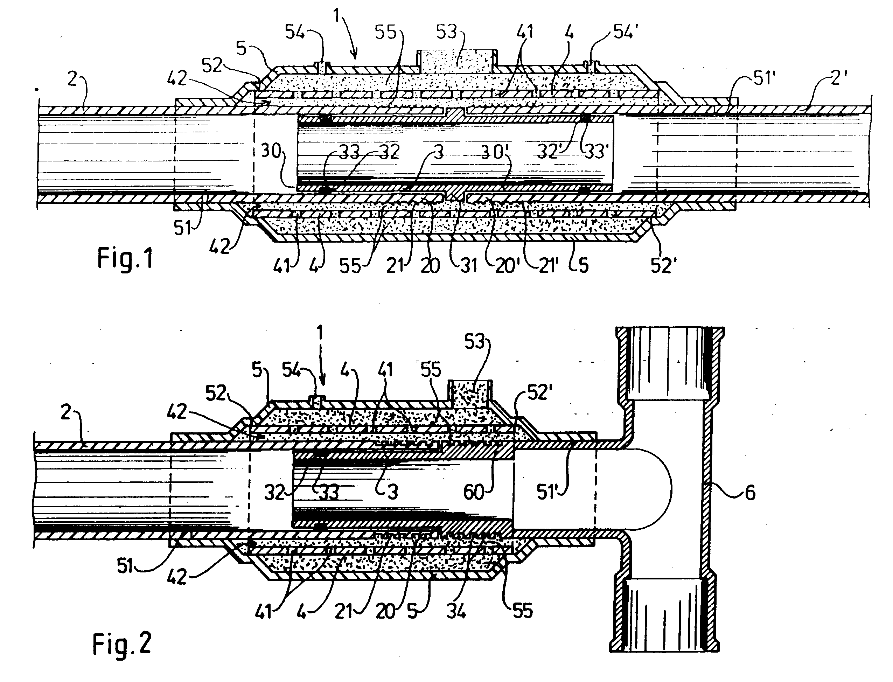

Figur 1 zeigt zwei Kunststoffrohre 2 und 2', die im Bereich ihrer Enden 20 und 20' miteinander verbunden sind. Außenseitig weisen die beiden Rohrenden 20 und 20' in Umfangsrichtung verlaufende Rillen 21 bzw. 21' auf, die z. B. parallel zueinander verlaufen oder die Form eines Gewindes haben können. Beide Rohrenden 20 bzw. 20' sind auf die Enden 30, 30' einer metallenen Innenhülse 3 aufgeschoben. Im Bereich der Enden 30 und 30' sind in diese jeweils außenseitige Nuten 32 bzw. 32' eingeschnitten, in welche jeweils ein umlaufender elastischer Dichtring 33 bzw. 33' eingelegt ist. Die Dichtringe 33 und 33' sind dabei, wie die Zeichnung zeigt, vorzugsweise in einem Bereich des Rohres 2 bzw. 2' angeordnet, der nicht durch die Rillen 21 bzw. 21' in der Außenseite der Rohrenden 20 und 20' geschwächt ist. Zwischen den Stirnenden der Rohre 2 und 2' liegt ein Mittelflansch 31 der Innenhülse 3, der dafür sorgt, daß die Einstecktiefen für die beiden Rohrenden 20 und 20' gleich sind.

In Richtung nach außen folgend ist um die Rohrenden 20 und 20' herum unter Freilassung eines Zwischenraumes 42 eine Außenhülse 4 angeordnet. Die Außenhülse 4 ist hier metallisch ausgeführt; sie kann jedoch auch beispielsweise aus einem keramischen Material oder aus einem Kunststoff bestehen. Die Außenhülse 4 hat die Form eines Hohlzylinders und weist eine Vielzahl von gleichmäßig verteilten Durchbrechungen 41 auf.

Den äußeren Teil der Rohrverbindung 1 bildet eine Schalung oder Gießform 5, die vorzugsweise in Form zweier miteinander verbindbarer, z. B. verklebbarer verrastbarer Halbschalen ausgebildet ist. Sie weist an ihren stirnseitigen Enden Rohröffnungen 51 und 51' auf, deren Innendurchmesser dem Außendurchmesser der Rohre 2 und 2' entspricht.

Weiterhin besitzt die Gießform 5 im Bereich der Enden der Außenhülse 4 jeweils eine Stufung 52 bzw. 52', mittels welcher die Außenhülse 4 in ihrer Lage zu den Rohren 2 und 2' sowie der Innenhülse 3 fixiert wird.

Der Zwischenraum 42 zwischen den Rohrenden 20 bzw. 20' und der Außenhülse 4 sowie zwischen der Außenhülse 4 und der Gießform 5 ist mit einem Mantel 55 aus einer zunächst fließfähigen, anschließend erhärtenden Masse ausgefüllt. Als derartige Massen eignen sich beispielsweise Zwei-Komponenten-Harze auf Polyether-Urethan-Basis oder aber auch Thermoplasten. Darüberhinaus sind dem Fachmann weitere geeignete Massen bekannt. Zur Einbringung der vergießfähigen Masse in das Innere der Gießform 5 weist diese in ihrem oberen, mittleren Teil eine Einfüllöffnung 53 und in ihrem oberen Teil zwei gegenüber der Einfüllöffnung 53 zu den Stirnseiten hin versetzte Entlüftungsöffnungen 54 und 54' auf, um ein Entweichen der von der einströmenden Vergußmasse verdrängten Luft aus dem Inneren der Vergießform 5 zu ermöglichen. Zur genauen Kontrolle des Gießvorganges besteht die Gießform 5 vorzugsweise aus einem durchsichtigen Kunststoff, z. B. Polystyrol.

Die Herstellung der in Figur 1 gezeigten Rohrverbindung erfolgt vorzugsweise nach folgendem Verfahrensablauf:

Zunächst werden die Enden 20 und 20' der beiden miteinander zu verbindenden Kunststoffrohre 2 und 2' mit den Rillen 21 bzw. 21' versehen, was beispielsweise mit einem Gewindeschneider oder einem anderen geeigneten Werkzeug erfolgen kann. Anschließend wird die Außenhülse 4 lose über eines der Rohre 2 und 2' geschoben und zunächst in eine gegenüber der Rohrverbindung 1 seitlich versetzte Warteposition gebracht. Als nächstes werden die Hülsenenden 30 und 30' der Innenhülse 3 in die Rohrenden 20 und 20' unter Zwischenlage der Dichtringe 33 und 33' eingesteckt.Als nächstes wird die Außenhülse 4 in ihre richtige Position verschoben, d. h. in die in der Figur 1 dargestellte Lage gebracht. Der nächste Schritt ist das Anlegen der Gießform 5, die, wie erwähnt, vorzugsweise aus zwei Halbschalen besteht. Durch das Anlegen der Gießform 5 wird zugleich die Außenhülse 4 in ihrer Lage relativ zu den Rohrenden 20 und 20' fixiert. Die orientierung der Gießform 5 ist dabei selbstverständlich so zu wählen, daß die Einfüllöffnung 53 und die Entlüftungsöffnungen 54 und 54' nach oben weisen. Anschliessend wird durch die Einfüllöffnung 53 die flüssige, später aushärtende Vergußmasse in das Innere der Gießform 5 eingefüllt, bis alle Hohl- und Zwischenräume im Inneren der Gießform 5 vollständig damit gefüllt sind. Nach dem Erhärten der Vergußmasse ist die Rohrverbindung 1 einsatzfertig. Die Gießform 5 verbleibt als verlorene Schalung an der Rohrverbindung 1.

Figur 2 zeigt eine Rohrverbindung 1′ zwischen einem Kunststoffrohr 2 und einem metallenen T-Stück 6. Auch bei diesem Ausführungsbeispiel der Rohrverbindung ist das Ende 20 des Kunststoffrohres 2 außenseitig mit Rillen 21 versehen, die hier eine rechteckige Querschnittsform aufweisen. An das Rohrende 20 ist unter Zwischenlage eines in eine Nut 32 eingelegten Dichtringes 33 ein Rohrsitz 3′ eingeschoben. Der Rohrsitz 3′ ist mit dem Stutzen 60 des T-Stücks 6 einstückig ausgeführt. Im Bereich des Stutzens 60 des T-Stückes 6 weist dieses außenseitig ebenfalls Rillen 34 auf, die auch hier eine rechteckige Querschnittsform haben. Um das Rohrende 20 und die Teile 60 und 3′ des T-Stückes 6 herum ist eine metallische Außenhülse 4 angeordnet, die hier wiederum mit Durchbrechungen 41 ausgeführt ist.

Nach außen wird die Rohrverbindung 1 abgeschlossen durch eine passend ausgebildete Gießform 5, die an ihrer linken Stirnseite eine Rohröffnung 51 aufweist, deren Innendurchmesser dem Außendurchmesser des Kunststoffrohres 2 entspricht und die an ihrer rechten Stirnseite eine Rohröffnung 51′ aufweist, deren Innendurchmesser dem Außendurchmesser des Stutzens 60 des T-Stückes 6 entspricht. Weiterhin besitzt die Gießform 5 auch hier wieder Stufungen 52 bzw. 52′ für die Fixierung der Außenhülse 4 relativ zu dem Rohrende 20 und dem Stutzen 60 des T-Stückes 6. Auch hier ist wieder ein Zwischenraum 42 zwischen dem Rohrende 20 und dem Stutzen 60 des T-Stückes 6 sowie der Außenhülse 4 vorhanden, der in der Praxis vorzugsweise einige Millimeter weit ist. Dieser Zwischenraum 42 sowie der Raum zwischen der Außenhülse 4 und der Gießform 5 ist wieder mit dem Vergußmasse-Mantel 55 ausgefüllt. Zur Einbringung der Vergußmasse in die Gießform 5 weist diese beim Ausführungsbeispiel nach Figur 2 eine im Bereich der rechten Stirnseite angeordnete oberseitige Einfüllöffnung 53 sowie eine in der Nähe der linken Stirnseite angeordnete oberseitige Entlüftungsöffnung 54 auf.

Die Herstellung der Rohrverbindung 1 gemäß Figur 2 erfolgt analog zu der unter Figur 1 beschriebenen Rohrverbindung, wobei hier allerdings die Rillen 34 in dem Verbindungsende 60 des T-Stückes zweckmäßig bereits bei dessen Herstellung eingebracht sind. In Abwandlung der Rohrverbindung 1 nach Figur 2 kann der Rohrsitz 3′ auch als mit dem T-Stück 6 zu verbindendes, z. B. zu verschraubendes oder zu verlötendes Bauteil ausgeführt sein.

Außer den beschriebenen Ausführungsbeispielen kann die Rohrverbindung 1 selbstverständlich auch für andere Konstellationen von Rohren und/oder anderen Elementen, insbesondere in der Installationstechnik verwendet werden, wie z. B. für Eckverbindungen, Abzweigungen, Übergänge von einem Rohrdurchmesser zu einem anderen Durchmesser, für Anschlüsse an Ventile oder Durchflußmesser und dergleichen mehr.

Als Vergußmassen eignen sich alle material- und temperaturverträglichen Materialien, wie z. B. betonartige oder keramische Massen, Bitumina, metallene Vergußmassen, aushärtende Ein- bzw. Mehr-Komponenten-Harze oder schmelzfähige Kunststoffe (Thermoplaste), insbesondere Polymerisate, soweit sie zunächst in einem fließenden Zustand sich befinden und anschließend in einen festen oder quasi-festen Zustand übergehen.

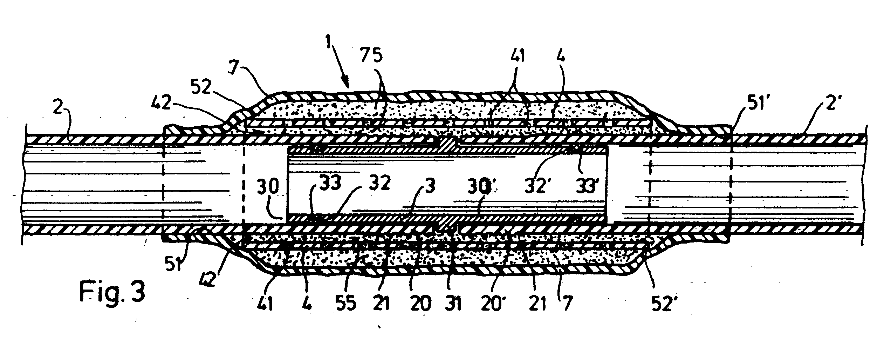

Figur 3 zeigt ein weiteres Ausführungsbeispiel mit einer Verfahrensvariante, bei der im Gegensatz zum Ausführungsbeispiel gemäß Figur 1 keine Gießform 55 verwendet wird. Um die Außenhülse 4 und einem wenigstens teilweise außerhalb der Hülse 4 befindlichen Thermoplasten, z.B. schmelzendes Polyethylen, ist eine Umhüllung 7 aus wärmeschrumpfender Folie aufgeschoben, die die thermoplastische Masse 55 und die Außenhülse 4 insgesamt einhüllt und an den Enden fest abschließt. Im übrigen handelt es sich um dieselbe Konfiguration wie in Figur 1. Zur Herstellung der Verbindung wird im Verbindungsbereich eine Temperatur erzeugt, in der der Thermoplast fließfähig ist und die Folie schrumpft, so daß die Umhüllung 7 einen Druck auf die Masse 55 ausübt und diesein die einzubettenden Bereiche hineindrückt. Die thermoplastische, zum Fließen gebrachte Masse, kann beispielsweise als eine thermoplastische Hülse 75 vorher aufgeschoben werden. Durch die schrumpfende Umhüllung 7 wird ein erheblicher Druck ausgeübt, der einen dichten, allseits anliegenden Mantel entstehen läßt. Das Erwärmen kann beispielsweise durch Warmluftgebläse, Hochfrequenz-Generatoren oder durch Tauchbäder in erwärmten Flüssigkeiten geschehen.

Eine solche schrumpffähige Umhüllung 7 kann auch zum Einpressen einer fließfähigen Masse verwendet werden, die kein Thermoplast ist, sondern entsprechend ihrer Zusammensetzung für eine bestimmte Zeit ihre fließfähige Konsistenz bewahrt und sich während der Zeit ihrer Fließfähigkeit analog zu den beschriebenen Vorgängen in die einzubettenden Bereiche drücken läßt.

**Patentansprüche**

1. Verfahren zum Verbinden von zwei Rohrenden (20, 20') oder von mit Stutzen (60) versehenen Formstücken mit einem Rohrende (20), mit folgenden Verfahrensschritten:

   a) die beiden Rohrenden (20, 20') werden auf die beiden Enden einer dicht anliegenden Innenhülse (3) oder auf das mit dem Stutzen (60) zu verbindende Rohrende (20) auf einen Rohrsitz (3') des Stutzens (60) aufgeschoben;

b) um die Rohrenden (20, 20') bzw. um das Rohrende (20) und den Stutzen (60) mit Rohrsitz (3') wird eine steife Außenhülse (4) gelegt, wobei ein vorhandener Zwischenraum (42) zwischen Innenmantel der Außenhülse (4) und Außenseite der Rohrenden mit einer verflüssigbaren Masse ausgefüllt wird,

dadurch gekennzeichnet, daß die verflüssigbare Masse in den innerhalb der Außenhülse (4) befindlichen Raum eingedrückt oder eingegossen wird und anschließend erhärtet, so daß anschließend die Rohrenden (20, 20') bzw. das Rohrende (20) oder Stutzen (60) mit Rohrsitz (3') sowie mindestens die Innenseiten der Außenhülse (4) in einem Rohrende(n) (20, 20'), gegebenenfalls mit Stutzen (60), übergreifenden Mantel (55) aus der erhärteten Masse eingebettet und gehalten sind.

2. Verfahren nach Anspruch 1, dadurch gekennzeichnet, daß die Außenhülse (4) mit einer Vielzahl von Durchbrechungen (41) versehen ist.

3. Verfahren nach Anspruch 1, dadurch gekennzeichnet, daß als Masse Elastomere, Thermoplaste Duromere oder Metalle mit niedrigem Schmelzpunkt verwendet werden.

4. Verfahren nach wenigstens einem der Ansprüche 1 bis 3, dadurch gekennzeichnet, daß um die Außenhülse (4) und um die wenigstens teilweise außerhalb der Außenhülse (4) befindlichen Masse, aus einem Thermoplasten, eine Umhüllung (7) aus wärmeschrumpfenden Material aufgeschoben wird, anschließend der Verbindungsbereich auf eine Temperatur erhitzt wird, in der bei Verwendung desselben der Thermoplast fließfähig wird und die Folie der Umhüllung (7) schrumpft, wobei dabei die Umhüllung (7) Druck auf die fließfähige vorhandene Masse ausübt und diese in die einzubettenden Bereiche drückt.

5. Verfahren nach Anspruch 1 bis 3, dadurch gekennzeichnet, daß eine der Enden (20, 20'; 60) sowie die Außenhülse (4) umgebende und in ihrer Lage zueinander fixierende, als verlorene Schalung dienende, die Vergußmasse aufnehmende Gießform (5) verwendet wird, die vorzugsweise aus zwei Formhälften zusammensetzbar ist und die mindestens eine Einfüllöffnung (53) für die Vergußmasse aufweist.

6. Verfahren nach Anspruch 5, dadurch gekennzeichnet, daß die Gießform (5) aus Kunststoff, vorzugsweise aus durchsichtigem Polystyrol besteht.

7. Verfahren nach den Ansprüchen 5 und 6, dadurch gekennzeichnet, daß an die Gießform (5) stirnseitig Ansatzstücke mit Rohröffnungen unterschiedlichen Durchmessers wahlweise ansetzbar sind.

8. Verfahren nach Anspruch 1, dadurch gekennzeichnet, daß jeweils die Rohrenden (20; 20'), gegebenenfalls der Stutzen (60) außerhalb des Rohrsitzes (3'), außenseitig haftreibungserhöhend, z.B. mit im wesentlichen in Umfangsrichtung verlaufenden Rillen (21, 21', 34) oder Stegen, vorstehenden Zähnen, aufgepreßten Zahnringen oder dergleichen, strukturiert oder mit einer angelösten Oberfläche versehen werden.

9. Verfahren nach Anspruch 8, dadurch gekennzeichnet, daß die Außenhülse (4) zumindest innenseitig haftreibungserhöhend strukturiert wird.

10. Verfahren nach Anspruch 8, dadurch gekennzeichnet, daß wenigstens ein elastischer Dichtring (33, 33'), vorzugsweise ein in eine Nut (32, 32') eingelegter O-Ring, zwischen Innenhülse (3) und Rohrende (20; 20') angeordnet wird.

**Claims**

1. A method of interconnecting two pipe ends (20, 20') or of connecting bossed (60) mouldings to one pipe end (20), the method comprising the following steps:

    (a) The two pipe ends (20, 20') are pushed on to the two ends of a sealingly engaging inner sleeve (3) or on to the pipe end (20) to be connected to the boss (60) on to a tubular seat (3') of the boss (60), and
    (b) A rigid outer sleeve (4) is placed around the pipe ends (20, 20') or around the pipe end (20) and the boss (60) with the seat (3'), a gap (42) which is left between the inner generated surface of the outer sleeve (4) and the outside of the pipe ends being filled with a liquefiable composition,

    characterised in that the liquefiable composition is pressed or poured into the gap in the outer sleeve (4), then hardened so that the pipe ends (20, 20') or the pipe end (20) or boss (60) with the seat (3') and at least the insides of the outer sleeve (4) are embedded and retained in a sheath or jacket (55) which consists of the hardened composition and which engages over the or each pipe end (20, 20') and which may or may not have a boss (60).

**2.** A method according to claim 1, characterised in that the outer sleeve (4) is formed with a number of perforations (41).

**3.** A method according to claim 1, characterised in that elastomers, thermoplastics, durosets or low-melting metals are used as composition.

**4.** A method according to at least one of claims 1 to 3, characterised in that an envelope or wrapping (7) made of a heat-shrinking material is pushed around the outer sleeve (4) and around the thermoplastic composition disposed at least to some extent outside the outer sleeve (4), whereafter the connection zone is heated to a temperature at which the thermoplastics, if used, becomes flowable and shrinks the foil of the wrapping or envelope (7), the same exerting pressure on the flowable composition and forcing the same into the zones to be embedded.

**5.** A method according to claims 1 to 3, characterised in that a mould (5) is used which extends around the ends (20, 20'; 60) and the outer sleeve (4), secures them in their position relatively to one another, is effective as lost shuttering and receives the encapsulating composition, the mould (5) preferably being adapted to be combined from two mould halves and being formed with at least one charging opening (53) for the encapsulating composition.

**6.** A method according to claim 5, characterised in that the mould (5) is made of plastics, preferably of transparent polystyrene.

**7.** A method according to claims 5 and 6, characterised in that projections formed with tubular openings of different diameters can be attached at choice to the end faces of the mould (5).

**8.** A method according to claim 1, characterised in that the pipe ends (20; 20') and possibly the boss (60) outside the seat (3') are structured externally so as to increase their friction of adhesion, for instance, by means of substantially peripherally extending grooves (21, 21', 34) or webs, projecting teeth, pressed-on toothed rings or the like or have a partly dissolved surface.

**9.** A method according to claim 8, characterised in that the outer sleeve (4) is structured at least internally so as to increase its friction of adhesion.

**10.** A method according to claim 8, characterised in that at least one resilient ring seal (33, 33'), preferably an O-ring placed in a groove (32, 32'), is disposed between the inner sleeve (3) and the pipe end (20; 20').

## Revendications

**1.** Procédé de raccordement de deux extrémités de tuyaux (20, 20'), ou de raccords de tuyauteries munis de tubulures (60) avec une extrémité de tuyau (20), comportant les étapes opératoires suivantes :

a) les deux extrémités de tuyaux (20, 20') sont enfilées sur les deux extrémités d'un manchon intérieur (3) appliqué de manière étanche, ou l'extrémité de tuyau (20) à relier avec la tubulure (60) est enfilée sur un siège (3') de la tubulure (60) ;

b) un manchon extérieur rigide (4) est placé autour des extrémités de tuyaux (20, 20') ou autour de l'extrémité de tuyau (20) et de la tubulure (60) munie du siège (3'), un espace intermédiaire (42) existant entre l'enveloppe intérieure du manchon extérieur (4) et la face extérieure des extrémités de tuyaux étant rempli d'une masse liquéfiable,

caractérisé en ce que la masse liquéfiable est coulée ou introduite par pression dans l'espace qui se trouve à l'intérieur du manchon extérieur (4) puis est durcie, si bien que les extrémités de tuyaux (20, 20') ou l'extrémité de tuyau (20) et la tubulure (60) munie du siège (3'), ainsi qu'au moins les faces intérieures du manchon extérieur (4) sont ensuite enrobées et maintenues dans une enveloppe (55) constituée par la masse durcie qui recouvre l'extrémité (les extrémités) de tuyaux (20, 20')et éventuellement la tubulure (60).

**2.** Procédé selon la revendication 1, caractérisé en ce que le manchon extérieur (4) est équipé d'une pluralité de découpures (41).

**3.** Procédé selon la revendication 1, caractérisé en ce que la masse utilisée est constituée par des élastomères, des thermoplastiques, des duromères ou des métaux présentant un point de fusion bas.

**4.** Procédé selon au moins l'une des revendications 1 à 3, caractérisé en ce qu'un enrobage (7) constitué d'un matériau thermorétractable est enfilé autour du manchon extérieur (4) et autour de la masse constituée d'un thermoplastique qui se trouve au moins partiellement à l'extérieur du manchon extérieur (4), en ce que l'assemblage est ensuite porte à une température à laquelle le thermoplastique, s'il est utilisé, devient fluide et la feuille de l'enrobage (7) se rétracte, l'enrobage (7) exerçant alors une pression sur la masse fluide existante et la pressant dans les zones à enrober.

5. Procédé selon la revendication 1 à 3, caractérisé en ce que l'on utilise un moule de coulée (5) qui entoure les extrémités (20, 20' ; 60) ainsi que le manchon extérieur (4), les fixe dans leur position respective et sert de coffrage perdu, ledit moule pouvant être de préférence assemblé à partir de deux moitiés et présentant au moins une ouverture de remplissage (53) pour la masse de remplissage.

6. Procédé selon la revendication 5, caractérisé en ce que le moule de coulée (5) est constitué de matière plastique, de préférence de polystyrol transparent.

7. Procédé selon les revendications 5 et 6, caractérisé en ce que des embouts à ouvertures tubulaires de différents diamètres peuvent être rapportés frontalement sur le moule de coulée (5).

8. Procédé selon la revendication 1, caractérisé en ce que chacune des extrémités de tuyaux (20 ; 20'), et éventuellement la tubulure (60) à l'extérieur du siège (3'), sont structurées à l'extérieur pour accroître le frottement par adhérence, par exemple avec des rainures (21, 21', 34) ou des nervures s'étendant pour l'essentiel en direction circonférentielle, des dents saillantes, des bagues dentées engagées par pression ou analogues, ou sont munies d'une surface structurée par solvant.

9. Procédé selon la revendication 8, caractérisé en ce que le manchon extérieur (4) est structuré au moins à l'intérieur pour augmenter le frottement par adhérence.

10. Procédé selon la revendication 8, caractérisé en ce qu'au moins une bague d'étanchéité élastique (33, 33'), de préférence un joint torique placé dans une gorge (32, 32'), est disposée entre le manchon intérieur (3) et l'extrémité de tuyau (20 ; 20').

Fig.1

Fig.2

Fig. 3